# EUROPÄISCHE PATENTSCHRIFT

(11) **EP 2 161 166 B1**
(45) Veröffentlichungstag und Bekanntmachung des Hinweises auf die Patenterteilung: **19.11.2014**
(21) Anmeldenummer: 09011063.6
(22) Anmeldetag: 28.08.2009
(51) Int. Cl.: B60R 22/20

(54) **Antriebssystem**
Drive system
Système d'entraînement

(30) Priorität: 29.08.2008 DE 102008044980
(43) Veröffentlichungstag der Anmeldung: 10.03.2010
(73) Patentinhaber: HS Products Engineering GmbH, 82239 Alling (DE)
(72) Erfinder: Heckmayr, Thomas, 86871 Rammingen (DE)
(74) Vertreter: Patentanwälte Bals & Vogel

(56) Entgegenhaltungen:
- EP-A1- 0 092 105
- EP-A2- 0 153 735
- DE-A1- 3 541 179
- DE-A1- 3 744 577
- DE-A1- 10 143 713
- DE-A1-102006 036 336
- DE-B3- 10 342 681
- US-A- 4 058 221
- US-B2- 6 976 707

## Beschreibung

Die Erfindung betrifft ein Antriebssystem, insbesondere für eine Vorrichtung zur Höhenverstellung eines schulternahen Ankerpunktes eines Fahrzeugsicherheitsgurtes sowie eine Vorrichtung zur Höhenverstellung eines schulternahen Ankerpunktes eines Fahrzeugsicherheitsgurtes.

Antriebssysteme für Vorrichtungen zur Höhenverstellung eines schulternahen Ankerpunktes eines Fahrzeugsicherheitsgurtes sind grundsätzlich bekannt und weisen üblicherweise ein Getriebe und einen Motor auf. Der Motor und das Getriebe sind bei den bekannten Antriebssystemen üblicherweise in der B-Säule eines Kraftfahrzeugs vorgesehen. Über eine in der B-Säule des Kraftfahrzeuges verlaufende Welle wird eine Spindel auf Schulterhöhe des Fahrers bzw. Beifahrers des Kraftfahrzeuges angetrieben, auf welcher ein Schlitten durch die Drehung der Spindel nach oben oder unten bewegt wird. Zur Befestigung des Antriebssystems am Kraftfahrzeug sind üblicherweise sowohl das Getriebe, als auch der Motor auf einer Platte befestigt, welche zum Befestigen am Kraftfahrzeug dient. Um die Funktionalität des Getriebes sicherzustellen ist das Getriebe bei bekannten Antriebssystemen häufig in einem Gehäuse vorgesehen. Das Gehäuse weist dabei meist mindestens zwei Öffnungen auf, wobei eine Öffnung zum Anschluss an die Abtriebswelle des Motors und eine Öffnung zur Aufnahme der Antriebswelle für die Spindel dient.

Nachteilig bei bekannten Antriebssystemen ist unter anderem der große Platzbedarf. So werden üblicherweise standardisierte Platten als Schnittstelle zum Befestigen in der B-Säule des Kraftfahrzeuges verwendet, auf welchen wiederum das Antriebssystem, also das Getriebe und der Motor befestigt werden. Über diese Platte und das Getriebe überträgt sich das Geräusch und die Vibration des Motors, welche durch das Betreiben desselben erzeugt wird, auf die B-Säule und die gesamte Karosserie. Darüber hinaus muss die Ausrichtung des Motors zum Eingang des Getriebes exakt erfolgen. Ungenauigkeiten bei der Ausrichtung des Motors, insbesondere ein Axialversatz oder ein Winkelunterschied zwischen der Abtriebswelle des Motors und dem Eingang des Getriebes erzeugen einerseits hohe Leistungsverluste, andererseits zusätzliche Vibrationen und Geräusche. Bei den bekannten Antriebsystemen ist somit neben dem Bauvolumen zusätzlich die Geräuschentwicklung und dessen Übertragung auf die Karosserie nachteilig.

Darüber hinaus liegt der Motor bei bekannten Antriebssystemen häufig zwischen der Innenverkleidung des Fahrzeugs und den äußeren Karosserieteilen. An diesem Ort ist es möglich, dass negative Umwelteinflüsse, wie beispielsweise Salzwasser von, im Winter zur Befreiung von Eis, gesalzenen Straßen durch Spalten und Ritzen in diesen Bereich eindringt. Die Beaufschlagung mit Salzwasser sowohl direkt, als auch indirekt durch die Bildung einer korrosiven Atmosphäre, beschleunigt die Korrosion des Motors und damit die Fehleranfälligkeit.

Aus dem Stand der Technik ist DE-B-10 342 681 bekannt, die eine Fahrzeuglenkung mit einer Übersetzungsverhältnis änderungseinrichtung beschreibt.

Aufgabe der vorliegenden Erfindung ist es, die Nachteile der bekannten Antriebssysteme zu beheben.

Gelöst wird diese Aufgabe durch ein Antriebssystem gemäß den Merkmalen von Anspruch 1, beziehungsweise durch eine Vorrichtung gemäß den Merkmalen von Anspruch 15.

Ein erfindungsgemäßes Antriebssystem, insbesondere für eine Vorrichtung zur Höhenverstellung eines schulternahen Ankerpunktes eines Fahrzeugsicherheitsgurtes, weist ein Getriebe und einen Motor auf, wobei der Motor eine Ausgangswelle aufweist. Diese Ausgangswelle steht mit dem Getriebe in drehmomentschlüssiger Verbindung, wobei ein im Wesentlichen geschlossenes Gehäuse vorgesehen ist, in welchem sowohl der Motor, als auch das Getriebe angeordnet sind. Ein derartiges Antriebssystem löst sämtliche voranstehend beschriebene Probleme von bekannten Antriebssystemen. Durch das Vorsehen eines Gehäuses, welches im Wesentlichen geschlossen ist und sowohl den Motor als auch das Getriebe enthält, sind beide Elemente, also Motor und Getriebe vor negativen Umwelteinflüssen geschützt. Darüber hinaus dämpft das Gehäuse dadurch, dass es im Wesentlichen geschlossen ausgeführt ist, sowohl die Vibrationen, als auch die Geräuschentwicklung des Motors während des Betriebes ab und ermöglicht somit einen leiseren Antrieb. Auch der Einbau eines erfindungsgemäßen Antriebssystems wird vereinfacht. Durch das externe Fertigen und Zusammenbauen des Motors und Getriebes in einem Gehäuse, kann dieses fertig vormontiert in der B-Säule angebracht werden. Das Vorsehen einer zusätzlichen Adapterplatte für die Montage am Fuß der B-Säule eines Kraftfahrzeuges entfällt. So ist einerseits die Fertigung sowohl genauer und damit fehlerfreier, als auch der Einbau durch die Vormontage im Gehäuse schneller. Durch den Entfall der Adapterplatte entstehen neben der Zeitersparnis bei Fertigung und Einbau auch noch eine Kostenersparnis durch Materialeinsparung.

Der Motor ist im Gehäuse gedämpft, insbesondere schwimmend gelagert. Die gedämpfte Lagerung des Motors im Gehäuse hat zum einen die Folge, dass die Vibration des Motors und die damit einhergehende Schallentwicklung in der dämpfenden Lagerung aufgefangen wird. Der Motor hat somit in der dämpfenden Lagerung ein gewisses Spiel, welche Vibrationen zulässt, diese aber nicht auf weiter Teile, insbesondere das Gehäuse überträgt.

Es kann vorteilhaft sein, wenn bei einem erfindungsgemäßen Antriebssystem für den Motor mindestens ein zumindest teilweise ringförmiges Lagerelement vorgesehen ist. Derartige ringförmige Lagerelemente können beispielsweise in Form von O-Ringen ausgebildet sein, welche um den Motor herum verlaufen und diesen dämpfend, insbesondere schwimmend im Gehäuse lagern. Zur axialen Fixierung der ringförmigen Lagerelemente am Motor können beispielsweise Rastnuten am Motor und/oder am Gehäuse vorgesehen sein. Bei beispielsweise mehrteiligen, insbesondere zweiteiligen Gehäusen, kann der Motor, nachdem er mit ringförmigen Lagerelementen versehen worden ist in das erste der Motorgehäuseteile eingesetzt werden und in einem zweiten Schritt das Motorgehäuse mit den verbleibenden Teilen verschlossen werden.

Zusätzlich oder alternativ kann bei einem erfindungsgemäßen Antriebssystem am Motor mindestens ein zumindest teilweise umgreifendes Lagerelement vorgesehen sein. Ein derartiges zumindest teilweise umgreifendes Lagerelement ist beispielsweise als Lagerschale ausgebildet. Insbesondere sind zwei derartige Lagerschalen vorgesehen, welche an Vorder- und Rückseite des Motors diesen umgreifen und im Gehäuse dämpfend, insbesondere schwimmend lagern. Ein großer Vorteil durch das Umgreifen der Lagerelemente ist die einfache und schnelle Montage dieser Lagerelemente am Motor. So können diese in einfacher Weise auf diesen aufgeschoben, bzw. aufgesteckt werden. Das Einsetzen in einem mehrteiligen Gehäuse erfolgt in ähnlicher Weise, wie voranstehend zu den ringförmigen Lagerelementen beschrieben.

Ebenfalls zusätzlich oder alternativ kann die Lagerung des Motors in einem Gehäuse bei einem erfindungsgemäßen Antriebssystem in Form von Gumminieten erfolgen. Derartige Gumminieten können im Gehäuse vorgesehen sein und zur Lagerung des Motors dienen. Ob die Gumminieten am Gehäuse, und/oder am Motor oder an keinem der beiden Elemente befestigt sind, ist dabei unerheblich. Auch das Anspritzen der Gumminieten am Gehäuse, insbesondere durch ein 2-Komponenten Spritzgussverfahren ist möglich. Wesentlich ist ausschließlich die Entkopplung der Motorvibration vom Gehäuse durch die Anordnung von Lagerelementen, in diesem Fall Gumminieten zwischen diesen beiden Elementen.

Um die definierte Anordnung des Motors im Gehäuse sicherstellen zu können und zusätzlich eine axiale Fixierung des Motors zu erreichen, ist es vorteilhaft, wenn bei einem erfindungsgemäßen Antriebssystem mindestens ein Lagerelement und/oder mindestens eine Gumminiete mit Ausnehmungen im Gehäuse korrespondiert. Derartige Ausnehmungen sind beispielsweise durch Nuten, Vertiefungen oder ähnliche konstruktive Gestaltungsmerkmale ausgestaltet.

Vorteilhafterweise ist zur drehmomentschlüssigen Verbindung zwischen Motor und Getriebe bei einem erfindungsgemäßen Antriebssystem auf der Ausgangswelle des Motors zumindest ein Abtriebselement, insbesondere ein Zahnrad zur drehmomentschlüssigen Verbindung mit dem Getriebe vorgesehen. Dabei ist zwischen dem Zahnrad und der Ausgangswelle ein dämpfendes insbesondere schalldämpfendes, verdrehsicheres Dämpfungselement vorgesehen. Durch das Vorsehen eines erfindungsgemäßen Dämpfungselements zwischen der Ausgangswelle des Motors und dem Abtriebselement, wobei die Ausgangswelle des Motors sowohl direkt, als auch indirekt über ein oder mehrere Zwischenstücke in das Dämpfungselement eingreifen kann, ist der Motor vollständig vibrationsentkoppelt. Sowohl das Motorgehäuse, als auch die Ausgangswelle sind mit dämpfenden Elementen versehen, so dass der Motor vollständig gedämpft ist und insbesondere schwimmend gelagert ist. Hier zeigt sich ein weiterer großer Vorteil der vorliegenden Erfindung. Durch die schwimmende Lagerung des Motors und die damit einhergehende Vibrationsentkopplung wären notwendigerweise eigentlich sehr geringe und damit sehr aufwändige Fertigungstoleranzen notwendig. Durch die Dämpfung im Gehäuse kann der Motor sich in kleinen Bereichen bewegen, insbesondere verkippen. Durch das Verkippen des Motors entsteht ein Winkelversatz zwischen der Achse der Abtriebswelle des Motors und der Achse des Abtriebselementes, insbesondere des Zahnrades zur drehmomentschlüssigen Verbindung mit dem Getriebe. Ein derartiger Winkelversatz führt zu großen Verlusten in der Leistungsabgabe des Motors. So müsste grundsätzlich bei der schwimmenden Lagerung des Motors ein größerer Motor vorgesehen werden, um das durch die schwimmende Lagerung entstehende höhere Leistungserfordernis auszugleichen. Durch das Vorsehen eines zusätzlichen verdrehsicheren Dämpfungselementes zwischen Ausgangswelle und Abtriebswelle kann auf einen größeren Motor verzichtet werden und gleichzeitig relativ große Fertigungstoleranzen zugelassen werden. Das Dämpfungselement, welches primär zum Vibrationsentkoppeln des Motors dient, hat zusätzlich den Effekt, dass es kleine Winkelversätze zwischen der Achse der Ausgangswelle des Motors und der Achse des Abtriebselements ausgleichen kann und damit ein leistungsschwächerer Motor ausreicht. Der leistungsschwächere Motor hat zusätzlich den Vorteil, dass er leiser betrieben werden kann, da weniger Leistung erforderlich ist. Somit erzeugt das Vorsehen eines Dämpfungselementes zwischen Ausgangswelle des Motors und Abtriebselement im doppelten Sinn eine Geräuschdämpfung, einmal direkt durch die Vibrationsentkopplung und einmal indirekt durch die Möglichkeit des Vorsehens eines kleineren Motors. Neben dem positiven akustischen Effekt bedeutet ein leistungsschwächerer Motor auch eine Kostenersparnis.

Für den Fall, dass ein erfindungsgemäßes Antriebssystem nicht direkt mit der Spindel einer Höhenverstellung eines schulternahen Ankerpunktes eines Fahrzeugsicherheitsgurtes verbunden ist, sondern insbesondere im Fußraum in der Nähe der B-Säule eines Kraftfahrzeuges angeordnet sein soll, kann es vorteilhaft sein, wenn eine Antriebswelle drehmomentschlüssig mit dem Ausgang des Getriebes verbunden ist. Diese Antriebswelle überbrückt den Abstand zwischen Getriebe und Ankerpunkt eines Fahrzeugsicherheitsgurtes.

Um noch größere Freiheit bezüglich der Anordnung des erfindungsgemäßen Antriebssystems im Kraftfahrzeug zu erhalten, ist die Antriebswelle eines erfindungsgemäßen Antriebssystems vorteilhafterweise als flexible Antriebswelle ausgestaltet. Derartige flexible Antriebswellen können in gewissen Bereichen um Kurven und komplexere Geometrie verlaufen und trotzdem sicher und verlustfrei Drehmoment übertragen.

Ebenfalls vorteilhaft ist es, wenn die flexible Antriebswelle in einer Führung läuft und zwischen Führung und flexibler Antriebswelle Flockmaterial vorgesehen ist, welches insbesondere schalldämpfende Eigenschaften aufweist. Durch die Rotation der flexiblen Antriebswelle in einer Führung kann es zu Reibungskontakten zwischen Antriebswelle und Führung kommen. Derartige Reibungskontakte können je nach Materialpaarung Geräusche entwickeln. Um auch hier Geräuschentwicklung auf ein Minimum zu reduzieren, kann das Füllen mit Flockmaterial in der Füllung einerseits den Kontakt zwischen Führung und Antriebswelle verhindern, darüber hinaus auch sonstige Geräusche, welche über die Antriebswelle übertragen werden, dämpfen. Zusätzlich kann es vorteilhaft sein, wenn um die Führung herum ein Mantel vorgesehen ist, welcher ebenfalls schalldämpfende und/oder thermisch isolierende Eigenschaften hat.

Das Gehäuse eines erfindungsgemäßen Antriebssystems ist vorteilhafterweise zur Montage in der B-Säule eines Kraftfahrzeuges vorbereitet. Hierzu sind beispielsweise Ösen oder Laschen vorgesehen, in welchen dämpfende Gummitüllen einsetzbar sind, welche wiederum Stahlbuchsen aufnehmen können. Über diese Stahlbuchsen kann mittels Niet- oder Schraubverbindungen das Gehäuse in der B-Säule eines Kraftfahrzeuges befestigt werden. Das Vorsehen von zusätzlichen Gummitüllen erzeugt eine zusätzliche, sozusagen sekundäre Vibrationsentkopplung des Motors. Neben der primären Entkopplung innerhalb des Gehäuses, ist das Gehäuse selbst sekundär gegenüber der Karosserie des Kraftfahrzeuges durch Gummitüllen entkoppelt.

Zur Steuerung eines erfindungsgemäßen Antriebssystems ist vorteilhafterweise am Getriebe ein Signalgeber vorgesehen. Dieser Signalgeber zählt die Umdrehungen der Antriebswelle oder des mit der Antriebswelle fest verbundenen letzten Getriebezahnrades direkt oder indirekt. Die gezählten Umdrehungen werden in Form eines Signals an eine zentrale Steuereinheit gesendet. Derartige Signalgeber können beispielsweise als Hall-Sensoren ausgestaltet sein, welche Magnetimpulse aufnehmen können. Bei der Verwendung eines Hall-Sensors ist an der Antriebswelle oder an dem mit der Antriebswelle fest verbundenen letzten Getriebezahnrad ein oder mehrere Magnete befestigt, welche vom Hall-Sensor detektiert werden können. Die Magnete, der Hall-Sensor und das Getriebezahnrad sind dabei im Bezug auf Dimensionierung und Drehgeschwindigkeiten derart abgestimmt, dass die vom Hall-Sensor detektierte Signallänge an die Steuereinheit größer oder gleich 6 Millisekunden beträgt.

Um negative Umwelteinflüsse auf Getriebe und Motor weiter auszuschließen ist ein erfindungsgemäßes Antriebssystem vorteilhafterweise gegen derartige Umwelteinflüsse abgedichtet. Diese Abdichtung kann beispielsweise durch das Vorsehen von einzelnen Dichtelementen oder einer umlaufenden Dichtlippe zwischen den Teilen eines mehrteiligen Gehäuses ausgebildet sein. Die Dichtkraft wird dabei aufgebracht durch die Befestigung, welche die einzelnen Gehäuseteile miteinander verbindet. Dies kann beispielsweise durch Schrauben erzielt werden. Hierbei sind vorteilhafterweise mindestens drei Schrauben vorgesehen, welche ein konstante Liniendichtkraft erzeugen können. Um die Montage noch weiter zu erleichtern sind die Gehäuseteile formschlüssig ausgeführt, sodass das insbesondere Schnapp-Rastelemente zwischen den einzelnen Gehäuseteilen eine Vormontage erlauben, wobei durch das feste Verbinden mittels Schrauben entmontiert wird.

Um die Schallentstehung noch weiter zu reduzieren, kann es vorteilhaft sein, wenn bei einem erfindungsgemäßen Antriebssystem die Innenkontur des Gehäuses zumindest teilweise an die Außenkontur des Motors und/oder des Getriebes angepasst ist, um den Resonanzraum des Gehäuses zu minimieren. Je weniger freier Resonanzraum innerhalb des Gehäuses vorhanden ist, umso weniger können Vibrationen, welche über die Dämpfung dennoch auf das Gehäuse übertragen worden sind zu lautern Geräusch resultieren. Die Reduktion des Resonanzraums dient somit zusätzlich, neben der Vibrationsentkopplung zur Schallminimierung eines erfindungsgemäßen Antriebssystems. Die Schallminimierung wird noch weiter verbessert durch das Verwenden schalldämpfender, bzw. schallschluckender Materialien. Derartige Materialien können beispielsweise für die Gehäuseteile oder einzelne Elemente des Motors selbst zum Einsatz kommen.

Ein weiterer Gegenstand der vorliegenden Erfindung ist eine Vorrichtung zur Höhenverstellung eines schulternahen Ankerpunktes eines Fahrzeugsicherheitsgurtes mit einer am Fahrzeugaufbau zu befestigenden Schiene, einem an der Schiene verschiebbaren Schlitten, einem am Schlitten befestigten Umlenkbeschlag, durch den der Sicherheitsgurt zu führen ist, wobei ein erfindungsgemäßes Antriebssystem vorgesehen ist, welches den beweglichen Schlitten direkt oder über eine Antriebswelle antreibt. Eine derartige Vorrichtung stellt das zum Einbau vorgesehene Gesamtsystem zur Höhenverstellung eines Fahrzeugsicherheitsgurtes dar. Neben dem erfindungsgemäßen Antriebssystem sind alle weiteren Elemente vorgesehen, um den Umlenkbeschlag des Fahrzeugsicherheitsgurtes nach oben oder unten zu verschieben und damit an die Schulterhöhe eines Fahrgasts anzupassen. Je nach Ausgestaltung der B-Säule des Kraftfahrzeuges kann dabei das Antriebssystem im unteren Bereich der B-Säule angeordnet sein und über eine flexible Welle mit der Vorrichtung zur Höhenverstellung verbunden sein. Jedoch ist auch ein direkter Anschluss zwischen Antriebssystem und Vorrichtung zur Höhenverstellung möglich, sofern genug Platz in der B-Säule des Kraftfahrzeuges ist.

Eine erfindungsgemäße Vorrichtung weist vorteilhafterweise eine Spindel auf, welche in der Schiene vorgesehen ist und auf welcher der Schlitten läuft. Diese Spindel ist in drehmomentschlüssiger Weise mit dem Antriebssystem oder mit der Antriebswelle des Antriebssystems verbunden.

Eine erfindungsgemäße Vorrichtung weist zusätzlich vorteilhafterweise eine Steuereinheit auf, welche das Antriebssystem, insbesondere in Relation zur Sitzeinstellung eines Kraftfahrzeuges steuert. So kann durch ein derartiges Steuersystem bei der elektrischen Sitzverstellung durch den Passagier eines Kraftfahrzeugs damit in Einklang auch die Höhe des Umlenkbeschlages des Fahrzeugsicherheitsgurtes elektrisch eingestellt werden.

Weiterhin kann es vorteilhaft sein, wenn bei einer erfindungsgemäßen Vorrichtung die Steuereinheit den Schlitten mittels des Antriebssystems in einer Pre-Crashsituation, also in einer Situation in der die Sensorik des Kraftfahrzeuges in erhöhter Alarmbereitschaft ist, im Bezug auf die B-Säule bewegt. Bei derartigen Pre-Crashsituationen, insbesondere bei hohen Beschleunigungswerten des Kraftfahrzeuges, beispielsweise durch abruptes Abbremsen oder schnellgefahrene Kurven, kann der Umlenkbeschlag des Fahrzeugsicherheitsgurtes in eine Pre-Crashposition verfahren werden. Durch das Verfahren in die Pre-Crashposition kann beispielsweise zusätzlich die Hauptblockierung der Wickelwelle des Fahrzeugsicherheitsgurtes verrastet werden. Eine derartige Pre-Crashsituation kann beispielsweise an den Motor durch eine Erhöhung der Spannung wiedergegeben werden. So kann beispielsweise der Regelbetrieb des Motors einer erfindungemäßen Vorrichtung bei 12 Volt erfolgen, während im Pre-Crashfall bis zu 48 Volt zum Antrieb des Motors verwendet werden und damit die Drehzahl des Motors sich deutlich erhöht.

Um die Pre-Crashsituation noch weiter zu verbessern, kann eine erfindungsgemäße Vorrichtung zusätzlich Verriegelungsmittel vorsehen, welche den Schlitten in einer Crashsituation oder in einer Pre-Crashsituation in der zugehörigen Position mechanisch fest verriegeln. Kommt es nach einer Pre-Crashsituation zum Crash, ist durch das Antriebssystem einer erfindungsgemäßen Vorrichtung der Schlitten der Vorrichtung mechanisch verriegelt. Eine ungewollte Bewegung des Schlittens, welche durch die Kraft in einem Crash hervorgerufen werden könnte, ist durch die mechanische Verriegelung im Wesentlichen ausgeschlossen.

Weiter vorteilhafte Ausgestaltungen der Erfindung sowie mehrere Ausführungsbeispiele hierzu werden nachstehend in Verbindung mit den beigefügten Zeichnungsfiguren näher erläutert. Die innerhalb der Beschreibung und der Ausführungsbeispiele verwendeten Begriffe "links", "rechts", "oben" und "unten" beziehen sich auf die Zeichnungsfiguren in einer Ausrichtung mit normal lesbaren Figurenbezeichnungen und Bezugszeichen. Hierbei ist:
- Fig.1: eine Explosionsdarstellung einer Ausführungsform eines erfin- dungsgemäßen Antriebssystems,
- Fig. 2: ein Querschnitt durch eine Ausführungsform eines Gehäuses eines erfindungsgemäßen Antriebssystems,
- Fig. 3: ein Querschnitt durch das Gehäuse einer weiteren Ausgestal- tungsform eines erfindungsgemäßen Antriebssystems,
- Fig. 4: Explosionsdarstellung einer erfindungsgemäßen Vorrichtung,
- Fig. 5: Querschnitt durch eine Ausführungsform eines Gehäuses eines erfindungsgemäßen Antriebssystems

### Bezugszeichen

- 1: Antriebssystem
- 2: Antriebswelle
- 4: Führung
- 6: Mantel
- 8: Sicherung
- 10: Getriebe
- 12: Signalgeber
- 20: Motor
- 22: Ausgangswelle
- 23: Ausgangszahnrad
- 24: Zahnrad
- 25: Zwischenstück
- 26: Dämpfungselement
- 27: Lagerbuchse
- 30: Gehäuse
- 32: Ausnehmungen
- 40: ringförmiges Lagerelement
- 42: umgreifendes Lagerelement/Lagerschale
- 44: Gumminieten
- 52: Stecker
- 60: Vorrichtung
- 62: Schiene
- 64: Schlitten
- 66: Ankerpunkt
- 68: Spindel
- 69: Anschlagpuffer
- 80: Blende

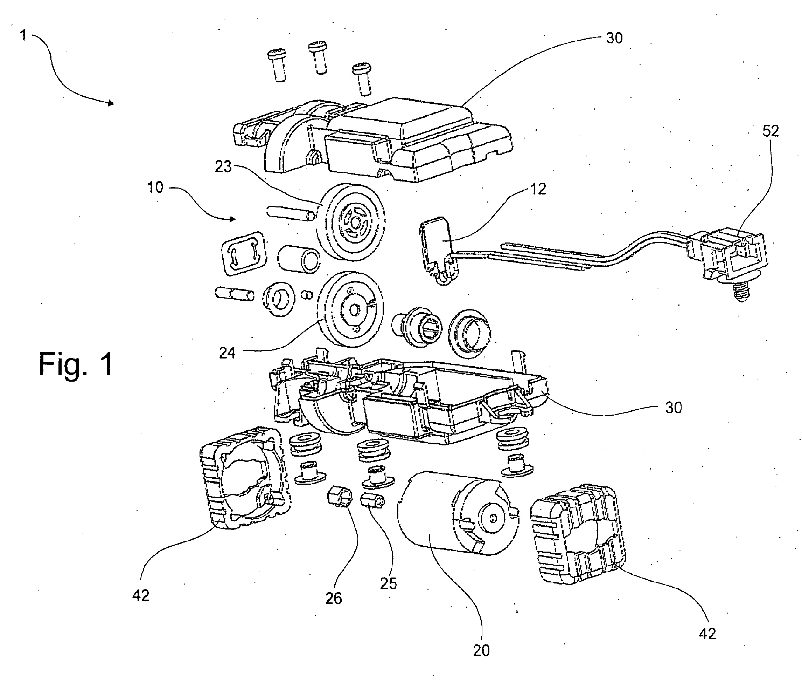

Fig. 1 zeigt eine Explosionsdarstellung eines Antriebssystems 1 in einer Ausführungsform. Das Antriebssystem 1 weist ein zweiteiliges Gehäuse 30 auf, welches im Wesentlichen durch ein Unter- und ein Oberteil gebildet wird. Das Gehäuse 30 nimmt sowohl den Motor 20, als auch das Getriebe 10 auf. Bei dem Getriebe 10 handelt es sich um ein zweistufiges Getriebe 10. Das Gehäuse 30 ist im Bereich des Getriebes 10 im Wesentlichen an die Außenkonturen der beiden großen Zahnräder (23, 24) angepasst. Der Resonanzraum des Gehäuses 30 im Getriebebereich wird somit auf ein Minimum reduziert. Am Ausgangszahnrad 23, welches für den Kontakt in drehmomentschlüssiger Weise mit der Antriebswelle, bzw. direkt mit einer Vorrichtung zur Höhenverstellung eines schulternahen Ankerpunktes vorgesehen ist, sind Magnetelemente angebracht. Diese Magnetelemente dienen zur Detektion durch einen Hall-Sensor 12, welcher in der Nähe des Ausgangszahnrades 23 ebenfalls im Gehäuse 30 angebracht ist. Vom Hall-Sensor 12 erstrecken sich Kabel durch das Gehäuse entlang eines Kabelkanals, welcher im unteren Teil des Gehäuses 30 auf der hinteren Seite erkennbar ist. Die Kabel laufen zu einer kleinen Öffnung auf der, in Fig. 1 rechts dargestellten Seite des Gehäuses 30. In dieser Öffnung wird ein Stecker 52 platziert, welcher zum Anschluss des Antriebssystems 1 über ein weiteres Kabel an eine Steuereinheit gedacht ist. Der Stecker 52 dient ebenfalls zum elektrischen Anschluss des Motors 20. Vom Stecker 52 laufen neben den Kabeln zum Hall-Sensor 12 weitere Verbindungskabel zum Motor 20 und versorgen diesen mit dem zum Antrieb nötigen Strom.

Der Motor 20 wird auf Vorder- und Rückseite von Lagerschalen 42 aus Kunststoffmaterial, insbesondere aus Gummi umfasst. Diese Lagerschalen 42 haben eine im Wesentlichen zylindrische Ausformung, welche mit der Außenkontur des Motors 20 korrespondiert. So können die Lagerschalen 42 auf den Motor 20 aufgeschoben/aufgesteckt werden. Die Außenkontur der Lagerschalen 42 ist im Wesentlichen rechteckig. Diese rechteckige Außenkontur der Lagerschalen 42 korrespondiert mit dem Hohlraum im Gehäuse 30, welcher zur Aufnahme des Motors dient. Zur Montage des Antriebssystems 1 wird das Getriebe 10 in das Gehäuse 30 mit sämtlichen Lagerhülsen für die Zahnräder eingebaut. In einem nächsten Schritt kann der Hall-Sensor 12 an der dafür vorgesehenen Stelle im Gehäuse 30 platziert werden und die Kabel zwischen Hall-Sensor und Stecker 52 im korrespondierenden Kabelkanal auf der Rückseite des Gehäuses 30 verlegt werden. Der Stecker 52 wird über einen Schnapp-Rastmechanismus in der Öffnung im Gehäuse 30 fixiert. Im nächsten Schritt werden die Lagerschalen 42 auf den Motor 20 aufgesetzt. Auf die Ausgangswelle des Motors 20 wird mittels einer Passung ein Zwischenstück 25 aufgebracht. Auf dieses Zwischenstück 25 wird ein Dämpfungselement 26 ebenfalls mittels Passung aufgebracht. Dieses Dämpfungselement 26 greift in das Zahnrad 24, bzw. in eine drehfest mit dem Zahnrad 24 verbundene Innenbuchse ein. Nach dem Einsetzen des Motors 20 und dem Verbinden der Ausgangswelle 22 über das Zwischenstück 25 und das Dämpfungselement 26 mit dem Zahnrad 24, bzw. der zugehörigen Innenbuchse, sind sämtliche Elemente im unteren Gehäuseteil angebracht. Die Verkabelung zwischen Stecker 52 und Motor 20 zu dessen Steuerung wird angeschlossen, anschließend als das obere Teil des Gehäuses 30 auf das untere Teil des Gehäuses 30 aufgesetzt und über zwei Schnapp-Rastelemente im vorderen Bereich und zwei Schnapp-Rastelemente im hinteren Bereich vormontiert. Die abschließende Montage erfolgt über drei oberhalb des oberen Gehäuseteils dargestellte Schrauben. Diese Schrauben greifen in, mit Gewinden versehene Löcher im unteren Teil des Gehäuses 30. Es werden drei Schrauben verwendet um zwischen den beiden Teilen des Gehäuses 30 einen Flächenkontakt zu erzeugen. Das so fertig gestellte und vormontierte Gehäuse 30 mit sämtlichen Komponenten kann nun im Fußraum der B-Säule oder direkt in der B-Säule des Kraftfahrzeuges montiert werden. Zu dieser Montage sind am Gehäuse 30 außen ösenförmige Laschen vorgesehen, welche zur Aufnahme von gummiförmigen Tüllen ausgestaltet sind, welche wiederum Buchsen aufnehmen können. Diese Buchsen dienen als Lagerung für Nieten oder Schraubverbindungen zur Fixierung des Antriebssystems 1 in der B-Säule eines Kraftfahrzeuges.

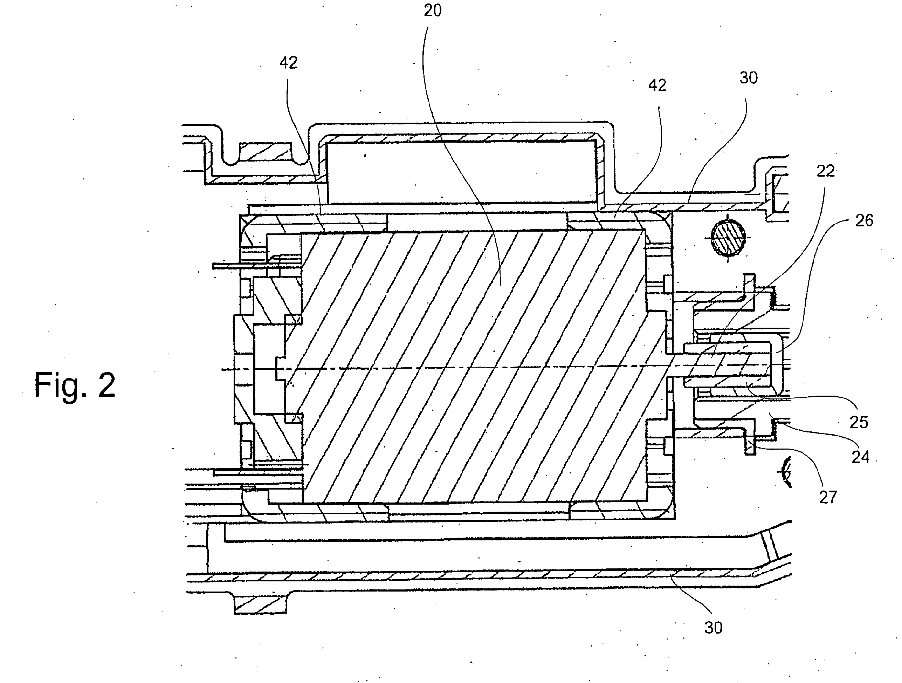

Fig. 2 zeigt im Ausschnitt einen Querschnitt durch eine Ausführungsform eines erfindungsgemäßen Antriebsystems 1. Der Motor 20 ist mit zwei Lagerschalen 42 versehen und im Gehäuse 30 angeordnet. Auf der rechten Seite der Fig. 2 ist die drehmomentschlüssige Verbindung zwischen der Ausgangswelle 22 des Motors 20 und dem Zahnrad 24 zu erkennen. Auf die Ausgangswelle 22 des Motors 20 ist ein Zwischenstück 25 mittels Passung aufgebracht. Bei einer runden Ausgangswelle 22 des Motors ist diese Passung eine Presspassung, welche insbesondere durch Aufschrumpfen, also durch Erhitzen und folgendes Abkühlen des Zwischenstücks 25 und der damit einhergehenden Ausdehnung und dem Zusammenziehen des Materials aufschrumpfbar. Durch diese Flächenpressung entsteht ein hoher Reibschluss zwischen Ausgangswelle 22 und Zwischenstück 25, welcher ausreichend ist, das für den Antrieb der Vorrichtung zur Höhenverstellung notwendige Drehmoment zu übertragen. Das Zwischenstück 22 weist zur Drehmomentsübertragung einen nicht-runden Querschnitt auf. Bei der Ausführungsform gemäß Fig. 2 ist die Außenkontur im Querschnitt des Zwischenstücks 25 im Wesentlichen rechteckig. Auf dieses rechteckige Zwischenstück 25 ist das Dämpfungselement 26 aufgesetzt. Das Dämpfungselement 26 ist dabei im Wesentlichen napfförmig ausgebildet, und bietet somit eine vollständige Entkopplung der Ausgangswelle 22 und des Zwischenstücks 25. Das Dämpfungselement 26 ist aus Kunststoffmaterial mit dämpfenden Eigenschaften gefertigt. Es ist ebenfalls als Passung auf dem Zwischenstück 25 angebracht. Die Außenkontur des Dämpfungselementes 26 ist ebenfalls nicht-rund, im vorliegenden Fall sechseckig ausgeführt und greift in das Zahnrad 24 in drehmomentschlüssiger Weise ein. Das Zahnrad 24 ist über eine Lagerbuchse 27 im Gehäuse 30 abgestützt. Der Eingang des Getriebes 10 über das Zahnrad 24 muss sich demnach nicht über die Ausgangswelle 22 und den Motor 20 abstützen, sondern hat als eigene Lagerung die Lagerbuchse 27. Insbesondere im Hinblick auf die Länge der Ausgangswelle 22 und den damit einhergehenden Hebelarm dient die zusätzlich Abstützung durch die Lagerbuchse 27 einer weiteren Reduktion der Schwingungs- und Vibrationsmöglichkeiten des Motors 20. Fig. 2 zeigt die vollständige Entkopplung des Motors 20. Sämtliche potentiellen Kontaktpunkte zwischen Motor 20 und Gehäuse 30 sind mittels Dämpfungselementen vibrationsentkoppelt. Die direkten Kontakte zwischen Gehäuse 30 und Motor 20 sind über die beiden Lagerschalen 42 abgedämpft. Der indirekte Kontakt zwischen Motor 20 und Gehäuse 30 über die Ausgangswelle 22 und das Zwischenstück 25 ist über das Dämpfungselement 26 vibrationsentkoppelt. Der Motor 20 ist somit vollständig schwimmend gelagert. Die drehungsschlüssige Verbindung zwischen Ausgangswelle 22 und Zahnrad 24 kann sowohl Axialversatz, als auch Winkelverschiebungen zwischen der Achse der Ausgangswelle 22 und der Achse des Zahnrades 24 in einem gewissen Bereich über das Dämpfungselement 26 ausgleichen.

Zwischen dem Raum für den Motor 20 im Gehäuse 30 und der Außenwand des Gehäuses 30 ist auf der Unterseite des Gehäuses 30 in Fig. 2 ein Kabelkanal zu erkennen. Dieser Kabelkanal, welcher sich in Fig. 2 von links nach rechts erstreckt dient zur Aufnahme des Kabels zwischen Stecker 52 und Hall-Sensor 12. Am linken unteren Eck des Motors 20 in Fig. 2 ist der Anschluss der Elektrik und der Steuerung für den Motor 20 und dessen Verbindung zum Stecker 52 zu erkennen. Der elektrische Anschluss des Motors 20 läuft dabei durch die Lagerschale 42 durch und kann somit auch keinen Vibrationskontakt zwischen Motor 20 und Gehäuse 30 herstellen. Das Kabel, welches vom Motor 20 weg läuft, ist somit selbstständig durch das Lagerelement 42 vibrationsentkoppelt gelagert.

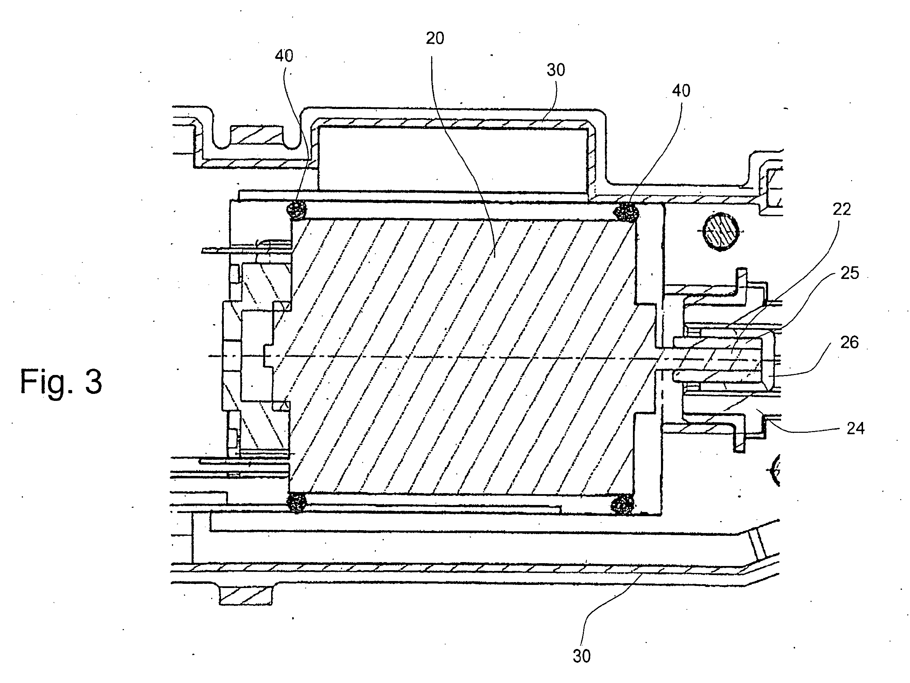

Fig. 3 zeigt einen Fig. 2 ähnlichen Ausschnitt eines Querschnitts jedoch einer weiteren Ausführungsform eines Antriebssystems 1. Der Motor 20 ist in dieser Ausführungsform nicht durch Lagerschalen 42, sondern durch ringförmige Lagerelemente 40 vibrationsentkoppelt im Gehäuse 30 gelagert. Diese ringförmigen Lagerelemente 40 sind als Ohrringe 40 ausgestaltet. Um eine konstruktive Beeinträchtigung des Gehäuses 30 und des Motors 20 zu vermeiden sind die Ohrringe 40 auf den Motor 20 aufgeschoben und dort mittels der, durch die Elastizität der Gummiringe 40 entstehenden Eigenspannung fixiert. Nuten in Gehäuse 30 oder Motor 20 sind bei dieser Ausführungsform nicht vorgesehen. Jedoch ist auf der linken Seite in Fig. 3 des Motors 20 eine kleine Lagerschale zur zusätzlichen Abstützung des Motors 20 erkennbar. Die Gestaltungsweise der Ausgangswelle 22, des Zwischenstücks 25, des Dämpfungselements 26 und das Zahnrades 24 ist identisch mit der voranstehend beschriebenen Konstruktion in Fig. 2. Auch der Kabelkanal im Gehäuse 30 ist in gleicher Weise ausgeführt.

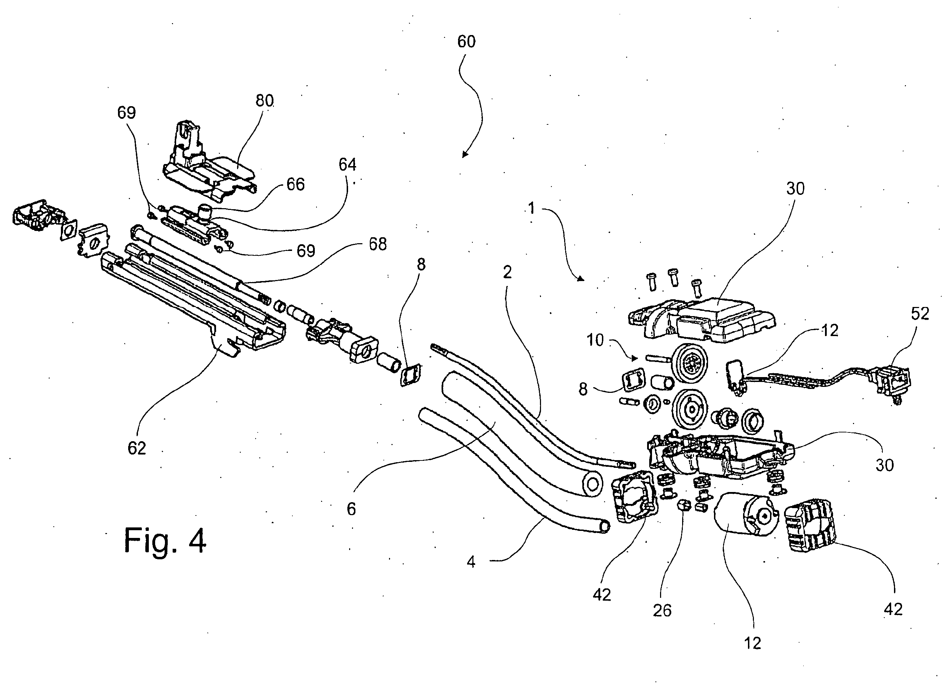

Fig. 4 zeigt eine Explosionsdarstellung einer Vorrichtung 60. Die Explosionsdarstellung des Antriebssystems 1 ist identisch mit der Darstellung in Fig. 1. Zusätzlich weist die Darstellung in Fig. 4 eine flexible Welle 2 auf, welche mit dem Ausgangszahnrad 23 des Getriebes 10 drehmomentschlüssig verbunden ist. Die flexible Welle 2 läuft in einer Führung 4, welche wiederum von einem Mantel 6 umgeben ist. Der Mantel 6 dient in diesem Fall sowohl zur thermischen, als auch zur Schallisolation. Am anderen Ende der Antriebswelle 2 greift diese über mehrere Zwischenbuchsen auf die Spindel 68 der Vorrichtung 60. Um sicherzustellen, dass die Führung 4 der flexiblen Welle 2 weder im Stillstand noch im Betrieb verrutschen kann, sind Sicherungen 8 im Gehäuse 30 sowie am oberen Ende der Welle 2 vorgesehen, welche mit einem Widerhakenprinzip die Führung 4 gegen Herausrutschen aus dem Gehäuse 30, bzw. aus dem unteren Bereich der Spindel 68 verhindern. Auf der linken Seite in Fig. 4 ist die Vorrichtung zum Verschieben des Haltepunktes dargestellt. Die Vorrichtung 60 weist neben der Spindel 68 eine Schiene 62 auf, welche zur Montage in der B-Säule eines Kraftfahrzeuges dient und gleichzeitig Elemente zur Lagerung der Spindel 68 vorsieht. Die Spindel 68 ist dabei sowohl an der Unter-, als auch an der Oberseite der Schiene 62 gelagert. Der obere Abschluss der Schiene 62 ist über eine Zwischenplatte und eine Teflonbeilagscheibe mit der Spindel 68 verbunden. Die Teflonbeilagscheibe dient zur wartungsfreien und reibungsarmen Lagerung der Spindel 68. Den oberen Abschluss der Schiene 62 bildet ein über Schnapp-Rastverbindungen aufschiebbares Abschlusselement aus Kunststoff. Zwischen der Spindel 68 und der flexiblen Welle 2 sind mehrere Zwischenstücke vorgesehen. Diese Zwischenstücke sind zur Drehmomentsübertragung mit äußeren, bzw. inneren Mehrkantkonturen ausgestaltet, welche insbesondere mit einem Mehrkantanschluss der flexiblen Welle, bzw. der Spindel 68 zusammenwirken können. Unter Mehrkant im Sinne der vorliegenden Erfindung werden alle nicht-runden Querschnittsgeometrien verstanden, welche zur Übertragung von Drehmomenten dienen können.

Auf der Spindel 68 läuft ein Schlitten 64, in welchem ein Element mit Innengewinde, in diesem Fall eine Mutter verdrehfest angebracht ist. Das Innengewinde dieser Mutter korrespondiert mit dem Außengewinde der Spindel 68. Sowohl Innengewinde, als auch Außengewinde sind Trapezgewinde und weisen eine Steigung von 1,5 auf. Durch ein Verdrehen der Spindel 68 wird durch die verdrehsichere Anordnung der Mutter im Schlitten 64 der Schlitten 64 je nach Drehrichtung nach oben oder unten bewegt. Zusätzlich weist der Schlitten 64 zwei Krägen auf, welche zur zusätzlichen Führung in der Schiene 62 dienen. An Ober-und Unterseite sind Anschlagpuffer 69 am Schlitten 64 vorgesehen, welche das Anschlagsgeräusch in den beiden Endpositionen des Schlittens 64 im Bezug zur Spindel 68 dämpfen. Um die Mechanik optisch vom Innenraum des Kraftfahrzeuges zu entkoppeln ist eine Blende 80 vorgesehen. Durch diese Blende 80, welche sich mit dem Schlitten 64 gemeinsam nach oben und unten relativ zur Spindel 68 bewegt greift ausschließlich der Anker 66 für den Umlegbeschlag durch. Der Schlitten 64 ist länglich ausgeprägt, sodass der Hebearm zwischen dem Ankerpunkt 66 und der im Schlitten 64 verdrehsicher angeordneten Mutter mit Innengewinde möglichst groß, insbesondere größer als 5 cm ist. Durch diesen großen Hebel wird einerseits ein Verkippen des Schlittens 64 in der Schiene 62 verhindert und darüber hinaus die Kraft, welche beim Crashfall über den Ankerpunkt 66 in den Schlitten 64 eingebracht wird und sich über das Innengewinde der verdrehsicher angeordneten Mutter auf der Spindel 68 abstützt, reduziert. Ohne diese Reduzierung wäre bereits bei geringeren Gurtkräften, welche sich über den Ankerpunkt 66 abstützen die Gefahr gegeben, dass das Gewinde der Spindel 68 oder der verdrehsicheren Mutter beschädigt und damit die Funktionsweise der Vorrichtung 60 beeinträchtigt wird.

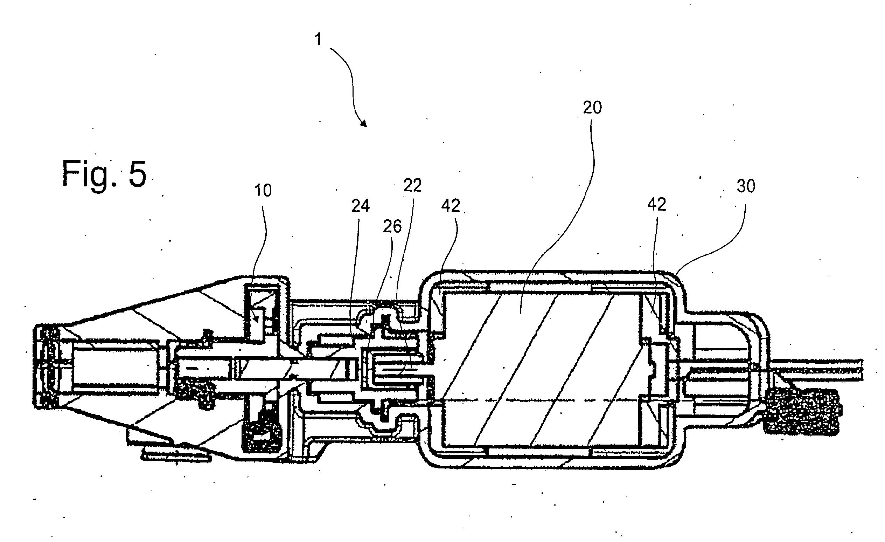

Fig. 5 zeigt den Querschnitt durch ein fertig montiertes Gehäuse eines Antriebssystems 1. Der Motor 20 ist mittels zwei Lagerschalen 42 im Gehäuse 30 fixiert. Im Fall der Fig. 5 handelt es sich um eine ähnliche Ausgestaltung wie in Fig. 2, jedoch in um 90° um die Achse des Motors gedrehter Darstellung. Auf der rechten Seite der Fig. 5 ist unten eine Tülle zu erkennen, durch welche eine Buchse zur Befestigung des Gehäuses 30 in der B-Säule des Kraftfahrzeuges geführt ist. Die Verbindung des Motors 20 über Ausgangswelle 22, Zwischenstück 25, Dämpfungselement 26 zum Zahnrad 24 ist, wie in Fig. 2 dargestellter Weise ausgeführt. Das Getriebe 10 ist im selben Gehäuse 30 angebracht. Das Gehäuse 30, welches sowohl das Getriebe 10 als auch Motor 20 umfasst, folgt gemäß Fig. 5 der Kontur des Getriebes 10 und des Motors 20. Unnötige Resonanz und auch unnötiger Bauraum in der B-Säule des Kraftfahrzeuges wird auf diese Weise vermieden. Am linken Ende des Gehäuse 30 gemäß Fig. 5 ist die Antriebswelle, welche nicht dargestellt ist vorgesehen. Das Ausgangszahnrad 23 des zweistufigen Getriebes 10 ist in dem Schnitt gemäß Fig. 5 nicht erkennbar, da es in einer hinteren Ebene liegt.

Die voranstehend beschriebenen Ausführungsformen der vorliegenden Erfindung sind lediglich Möglichkeiten zur Ausgestaltung der Erfindung. Sie beschränken den Schutzbereich und die Anwendungsmöglichkeiten nicht.

## Patentansprüche

1. Antriebssystem (1), für eine Vorrichtung zur Höhenverstellung eines schulternahen Ankerpunktes (66) eines Fahrzeugsicherheitsgurtes, aufweisend ein Getriebe (10) und einen Motor (20), wobei der Motor (20) eine Ausgangswelle (22) aufweist, welche mit dem Getriebe (10) in drehmomentschlüssiger Verbindung steht, wobei ein im Wesentlichen geschlossenes Gehäuse (30) vorgesehen ist, in welchem sowohl der Motor (20), als auch das Getriebe (10) angeordnet sind, und wobei
der Motor (20) auf der Ausgangswelle (22) zumindest ein Abtriebselement zur drehmomentschlüssigen Verbindung mit dem Getriebe (10) aufweist, wobei zwischen dem Abtriebselement und der Ausgangswelle (22) zumindest ein dämpfendes, insbesondere schalldämpfendes, verdrehsicheres Dämpfungselement (26) vorgesehen ist.

2. Antriebssystem (1) nachAnspruch1,
**dadurch gekennzeichnet, dass** der Motor (20) im Gehäuse (30) gedämpft, insbesondere schwimmend gelagert ist.

3. Antriebssystem (1) nach Anspruch 2,
**dadurch gekennzeichnet, dass** für den Motor (20) mindestens ein zumindest teilweise ringförmiges Lagerelement (40) vorgesehen ist.

4. Antriebssystem (1) nach einem der Ansprüche 2 und 3,
**dadurch gekennzeichnet, dass** am Motor (20) mindestens ein zumindest teilweise umgreifendes Lagerelement (42) vorgesehen ist.

5. Antriebssystem (1) nach einem der Ansprüche 2 bis 4,
**dadurch gekennzeichnet, dass** im Gehäuse (30) Gumminieten (44) vorgesehen sind, welche als Lagerung für den Motor (20) dienen.

6. Antriebssystem (1) nach einem der Ansprüche 3 bis 5,
**dadurch gekennzeichnet, dass** mindestens ein Lagerelement (40, 42) und/oder mindestens eine Gumminiete (44) mit Ausnehmungen im Gehäuse (30) korrespondiert.

7. Antriebssystem (1) nach einem der vorangegangenen Ansprüche,
**dadurch gekennzeichnet, dass** das Abtriebselement ein Zahnrad (24) ist.

8. Antriebssystem (1) nach einem der vorangegangenen Ansprüche,
**dadurch gekennzeichnet, dass** eine Antriebswelle (2) drehmomentschlüssig mit dem Getriebe (10) verbunden ist.

9. Antriebssystem (1) nach Anspruch 8,
**dadurch gekennzeichnet, dass** die Antriebswelle (2) als flexible Antriebswelle (2) ausgestaltet ist.

10. Antriebssystem (1) nach Anspruch 9,
**dadurch gekennzeichnet, dass** die flexible Antriebswelle (2) in einer Führung (4) läuft und zwischen Führung (4) und flexibler Antriebswelle (2) Flockmaterial vorgesehen ist, welches insbesondere schalldämpfende Eigenschaften aufweist.

11. Antriebssystem (1) nach einem der vorangegangenen Ansprüche,
**dadurch gekennzeichnet, dass** das Gehäuse (30) zur Montage in der B-Säule eines Kraftfahrzeuges vorbereitet ist.

12. Antriebssystem (1) nach einem der vorangegangenen Ansprüche,
**dadurch gekennzeichnet, dass** am Getriebe (10) ein Signalgeber (12) vorgesehen ist, welcher die Umdrehungen der Antriebswelle (2) oder des mit der Antriebswelle (2) fest verbundenen letzten Getriebezahnrades (23) direkt oder indirekt zählt und an eine zentrale Steuereinheit sendet.

13. Antriebssystem (1) nach einem der vorangegangenen Ansprüche,
**dadurch gekennzeichnet, dass** das Gehäuse (30) gegen negative Umwelteinflüsse abgedichtet ist.

14. Antriebssystem (1) nach einem der vorangegangenen Ansprüche,
**dadurch gekennzeichnet, dass** die Innenkontur des Gehäuses (30) zumindest teilweise an die Außenkontur des Motors (20) und/oder des Getriebes (10) angepasst ist, um den Resonanzraüm des Gehäuses (30) zu minimieren.

15. Vorrichtung (60) zur Höhenverstellung eines schulternahen Ankerpunktes (66) eines Fahrzeugsicherheitsgurtes mit einer am Fahrzeugaufbau zu befestigenden Schiene (62), einem an der Schiene (62) verschiebbaren Schlitten (64), einem am Schlitten (64) befestigten Umlenkbeschlag, durch den der Sicherheitsgut zu führen ist, wobei ein Antriebssystem (1) mit den Merkmalen eines der Ansprüche 1 bis 14 vorgesehen ist, welches den beweglichen Schlitten (64) direkt oder über eine Antriebswelle (2) antreibt.

16. Vorrichtung (60) nach Anspruch 15,
**dadurch gekennzeichnet, dass** eine Spindel (68) in der Schiene (62)) vorgesehen ist, auf welcher der Schlitten (64) läuft und welche in drehmomentschlüssiger Verbindung mit dem Antriebssystem (1) oder mit der Antriebswelle (2) steht.

17. Vorrichtung (60) nach einem der Ansprüche 15 oder 16,
**dadurch gekennzeichnet, dass** eine Steuereinheit vorgesehen ist, welche das Antriebssystem (1), insbesondere in Relation zur Sitzeinstellung steuert.

18. Vorrichtung (60) nach einem der Ansprüche 15 bis 17,
**dadurch gekennzeichnet, dass** die Steuereinheit den Schlitten (64) mittels des Antriebssystems (1) in einer Pre-Crash Situation im Bezug auf die B-Säule bewegt.

19. Vorrichtung (60) nach einem der Ansprüche 15 bis 18,
**dadurch gekennzeichnet, dass** Verriegelungsmittel vorgesehen sind, welche den Schlitten (64) in einer Crashsituation oder einer Pre-Crash Situation in der zugehörigen Position mechanisch fest verriegeln.

## Claims

1. A drive system (1) for a device for vertical adjustment of an anchor point (66), close to the shoulder, of a vehicle safety belt, having a gear (10) and a motor (20), wherein the motor (20) has an output shaft (22) which is in torque-locking connection with the gear (10), wherein a substantially closed housing (30) is provided, in which both the motor (20) and also the gear (10) are arranged, and wherein
the motor (20) has on the output shaft (22) at least one driven element for torque-locking connection with the gear (10), wherein between the driven element and the output shaft (22) at least one damping, in particular sound-damping, torsion-proof damping element (26) is provided.

2. The drive system (1) according to claim 1,
**characterized in that** the motor (20) is mounted in a damped manner, in particular floating, in the housing (30).

3. The drive system (1) according to claim 2,
**characterized in that** at least one at least partially annular bearing element (40) is provided for the motor (20).

4. The drive system (1) according to one of claims 2 and 3,
**characterized in that** at least one at least partially encompassing bearing element (42) is provided on the motor (20).

5. The drive system (1) according to one of claims 2 to 4,
**characterized in that** rubber rivets (44) are provided in the housing (30), which serve as a bearing for the motor (20).

6. The drive system (1) according to one of claims 3 to 5,
**characterized in that** at least one bearing element (40, 42) and/or at least one rubber rivet (44) corresponds with recesses in the housing (30).

7. The drive system (1) according to one of the preceding claims,
**characterized in that** the driven element is a toothed wheel (24).

8. The drive system (1) according to one of the preceding claims,
**characterized in that** a drive shaft (2) is connected in a torque-locking manner with the gear (10).

9. The drive system (1) according to claim 8,
**characterized in that** the drive shaft (2) is configured as a flexible drive shaft (2).

10. The drive system (1) according to claim 9,
**characterized in that** the flexible drive shaft (2) runs in a guide (4), and flock material, which has in particular sound-damping characteristics, is provided between the guide (4) and the flexible drive shaft (2).

11. The drive system (1) according to one of the preceding claims,
**characterized in that** the housing (30) is prepared for mounting in the B-column of a motor vehicle.

12. The drive system (1) according to one of the preceding claims,
**characterized in that** on the gear (10) a signal transmitter (12) is provided, which directly or indirectly counts the revolutions of the drive shaft (2) or of the last gear toothed wheel (23) securely connected with the drive shaft (2), and transmits this to a central control unit.

13. The drive system (1) according to one of the preceding claims,
**characterized in that** the housing (30) is sealed against negative environmental influences.

14. The drive system (1) according to one of the preceding claims,
**characterized in that** the inner contour of the housing (30) is adapted at least partially to the outer contour of the motor (20) and/or of the gear (10), in order to minimize the resonance cavity of the housing (30).

15. A device (60) for the vertical adjustment of an anchor point (66), close to the shoulder, of a vehicle safety belt, with a rail (62) to be fastened to the vehicle body, with a slide (64) displaceable on the rail (62), with a deflection fitting fastened to the slide (64), by which the safety belt is to be guided, wherein a drive system (1) having the features of one of claims 1 to 14 is provided, which drives the movable slide (64) directly or via a drive shaft (2).

16. The device (60) according to claim 15,
**characterized in that** a spindle (68) is provided in the rail (62), on which the slide (64) runs and which is in torque-locking connection with the drive system (1) or with the drive shaft (2).

17. The device (60) according to one of claims 15 or 16,
**characterized in that** a control unit is provided, which controls the drive system (1), in particular in relation to seat adjustment.

18. The device (60) according to one of claims 15 to 17,
**characterized in that** the control unit moves the slide (64) by means of the drive system (1) in a pre-crash situation with respect to the B-column.

19. The device (60) according to one of claims 15 to 18,
**characterized in that** locking means are provided, which lock the slide (64) securely mechanically in the relevant position in a crash situation or a pre-crash situation.

## Revendications

1. Système d'entraînement (1) pour un dispositif de réglage en hauteur d'un point d'ancrage (66) proche de l'épaule d'une ceinture de sécurité du véhicule, présentant une transmission (10) et un moteur (20), dans lequel le moteur (20) présente un arbre de sortie (22), qui est en liaison par couple de rotation avec la transmission (10), dans lequel un logement (30) essentiellement fermé est prévu, dans lequel tant le moteur (20) que la transmission (10) sont disposés, et dans lequel
le moteur (20) présente sur l'arbre de sortie (22) au moins un élément de sortie pour une liaison par couple de rotation avec la transmission (10), dans lequel entre l'élément de sortie et l'arbre de sortie (22) au moins un élément d'amortissement (26) atténuant notamment les sons, sécurisé contre une torsion est prévu.

2. Système d'entraînement (1) selon la revendication 1,
**caractérisé en ce que** le moteur (20) est positionné de manière amortie dans le logement (30), notamment flottant.

3. Système d'entraînement (1) selon la revendication 2,
**caractérisé en ce que** pour le moteur (20) au moins un élément de palier (40) au moins partiellement annulaire est prévu.

4. Système d'entraînement (1) selon une des revendications 2 et 3,
**caractérisé en ce que** sur le moteur (20) au moins un élément de palier (42) venant en prise au moins partiellement sur le pourtour est prévu.

5. Système d'entraînement (1) selon une des revendications 2 à 4,
**caractérisé en ce que** dans le logement (30) des rivets en caoutchouc (44) sont prévus, qui servent à positionner le moteur (20).

6. Système d'entraînement (1) selon une des revendications 3 à 5,
**caractérisé en ce qu'**au moins un élément de palier (40, 42) et/ou au moins un rivet en caoutchouc (44) correspond avec des évidements dans le logement (30).

7. Système d'entraînement (1) selon une des revendications précédentes,
**caractérisé en ce que** l'élément de sortie est une roue dentée (24).

8. Système d'entraînement (1) selon une des revendications précédentes,
**caractérisé en ce qu'**un arbre d'entraînement (2) est relié par couple de rotation avec la transmission (10).

9. Système d'entraînement (1) selon la revendication 8,
**caractérisé en ce que** l'arbre d'entraînement (2) est conçu comme un arbre d'entraînement flexible (2).

10. Système d'entraînement (1) selon la revendication 9, **caractérisé en ce que** l'arbre d'entraînement flexible (2) s'étend dans une coulisse (4) et entre la coulisse (4) et l'arbre d'entraînement flexible (2) un matériau de flocage est prévu, qui présente notamment des propriétés atténuant les sons.

11. Système d'entrainement (1) selon une des revendications précédentes,
**caractérisé en ce que** le logement (30) est préparé en vue du montage dans la colonne B d'un véhicule automobile.

12. Système d'entraînement (1) selon une des revendications précédentes,
**caractérisé en ce que** sur la transmission (10) un émetteur de signaux (12) est prévu, qui compte directement ou indirectement les tours de l'arbre d'entraînement (2) ou de la dernière roue dentée de transmission (23) reliée solidement à l'arbre d'entraînement (2) et émet à une unité de commande centrale.

13. Système d'entraînement (1) selon une des revendications précédentes,
**caractérisé en ce que** le logement (30) est isolé contre les influences environnementales négatives.

14. Système d'entraînement (1) selon une des revendications précédentes,
**caractérisé en ce que** le contour intérieur du logement (30) est adapté au moins partiellement au contour extérieur du moteur (20) et/ou de la transmission (10), afin de minimiser l'espace de résonance du logement (30).

15. Dispositif (60) de réglage en hauteur d'un point d'ancrage (66) proche de l'épaule d'une ceinture de sécurité de véhicule comportant un rail (62) à fixer sur la carrosserie du véhicule, un chariot (64) coulissable sur le rail (62), une garniture de déviation fixée sur le chariot (64), par l'intermédiaire de laquelle la ceinture de sécurité est guidée, dans lequel un système d'entraînement (1) présentant les caractéristiques d'une des revendications 1 à 14 est prévu, qui entraîne le chariot mobile (64) directement ou par l'intermédiaire d'un arbre d'entraînement (2).

16. Dispositif (60) selon la revendication 15,
**caractérisé en ce qu'**une broche (68) est prévue dans le rail (62), sur laquelle le chariot (64) circule et qui établit une liaison par couple de rotation avec le système d'entraînement (1) ou avec l'arbre d'entraînement (2).

17. Dispositif (60) selon une des revendications 15 ou 16,
**caractérisé en ce qu'**une unité de commande est prévue, qui commande le système d'entraînement (1), notamment relativement au réglage d'assise.

18. Dispositif (60) selon une des revendications 15 à 17,
**caractérisé en ce que** l'unité de commande déplace le chariot (64) au moyen du système d'entraînement (1) dans une situation de pré-crash par rapport à la colonne B.

19. Dispositif (60) selon une des revendications 15 à 18,
**caractérisé en ce que** des moyens de verrouillage sont prévus, qui verrouillent solidement mécaniquement le chariot (64) dans une situation de crash ou une situation de pré-crash dans la position afférente.
